(19) Europäisches Patentamt
European Patent Office
Office européen des brevets

(11) **EP 4 492 891 A1**

(12) **EUROPEAN PATENT APPLICATION**
published in accordance with Art. 153(4) EPC

(43) Date of publication:
**15.01.2025 Bulletin 2025/03**

(21) Application number: **22930236.9**

(22) Date of filing: **08.03.2022**

(51) International Patent Classification (IPC):
**H04W 72/04** (2023.01)  **H04L 5/00** (2006.01)

(52) Cooperative Patent Classification (CPC):
**H04L 5/00; H04W 72/04**

(86) International application number:
**PCT/CN2022/079693**

(87) International publication number:
**WO 2023/168590 (14.09.2023 Gazette 2023/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.
Beijing 100085 (CN)**

(72) Inventor: **CHI, Liangang
Beijing 100085 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **BEAM DETERMINATION METHOD AND APPARATUS**

(57)    The embodiments of the present invention belong to the technical field of communications. Disclosed are a beam determination method and apparatus. The beam determination method is applied to a terminal device, and the method comprises: receiving beam indication information sent by a network device, wherein the beam indication information is used for indicating an associated reference signal identifier sequence within a specified time period, and associated reference signal identifiers in the associated reference signal identifier sequence are used for indicating a sending beam used by the network device, or the associated reference signal identifiers in the associated reference signal identifier sequence are used by a terminal device to determine its own sending beam. **In** this way, according to the beam indication information sent by the network device, the terminal device can determine the sending beam used by the network device within the specified time period, or determine its own sending beam within the specified time period, thereby improving the prediction and tracking efficiency of a beam.

receiving beam indication information sent by a network device — 201

FIG. 2

EP 4 492 891 A1

**Description**

FIELD

The present invention relates to the field of communication technology, and more particularly to a method and apparatus for determining a beam.

BACKGROUND

In the new radio (NR) technology, millimeter wave communication has become a key technique for 5G NR. With the depletion of low-frequency wireless spectrum resources, the development and utilization of high-frequency millimeter wave and even terahertz communication technique has become an inevitable trend.

In order to deal with the serious challenges in path loss faced by high-frequency millimeter wave and terahertz communications, data transmission needs to be performed based on transmission and reception of beams (narrow beams). Therefore, how to accurately and efficiently predict and track beams is very important.

SUMMARY

Beam indication information sent by a network device is received, the beam indication information indicates an associated reference signal identification sequence within a specified time period; an associated reference signal identifier in the associated reference signal identification sequence indicates a sending beam to be adopted by the network device; an associated reference signal identifier in the associated reference signal identification sequence indicates a sending beam to be adopted by the network device; or an associated reference signal identifier in the associated reference signal identification sequence is for the terminal device to determine a sending beam of the terminal device.

In this technical solution, the terminal device can determine the sending beam to be adopted by the network device within the specified time period or determine the sending beam of the terminal device itself within the specified time period according to the beam indication information sent by the network device, which improves the beam prediction and tracking efficiency.

Optionally, the method further includes: reporting a beam measurement result to the network device for determining the beam indication information; or determining at least one recommended associated reference signal identification sequence according to a beam measurement result, and reporting the at least one recommended associated reference signal identification sequence. The at least one recommended associated reference signal identification sequence is used to determine the beam indication information.

Optionally, the beam measurement result includes: at least one measurement reference signal identifier, and at least one measurement result corresponding to each measurement reference signal identifier. The associated reference signal identifier is an identifier in the at least one measurement reference signal identifier.

Optionally, the measurement reference signal identifier includes at least one of: a measurement reference signal index, or an index of a time-frequency resource occupied by a measurement reference signal.

Optionally, the measurement result includes a measured value of at least one of: a reference signal receiving power (RSRP), a reference signal receiving quality (RSRQ), a received signal strength indication (RSSI), or a signal to interference plus noise ratio (SINR).

Optionally, the beam measurement result is obtained by the terminal device through receiving a measurement reference signal according to configuration information of the measurement reference signal and measuring the measurement reference signal. The configuration information of the measurement reference signal is specified by a protocol or pre-configured by the network device.

Optionally, the beam indication information includes: the associated reference signal identification sequence; or the beam indication information includes first M associated reference signal identifiers in the associated reference signal identification sequence, and a calculation function. The calculation function is used to calculate subsequent associated reference signal identifiers in the associated reference signal identification sequence according to the first M associated reference signal identifiers.

Optionally, the method further includes: determining the associated reference signal identification sequence according to the beam indication information; determining an associated reference signal identifier to be adopted in at least one sub-time period within the specified time period according to the associated reference signal identification sequence, the specified time period, and a time granularity for beam adjustment within the specified time period; in the at least sub-time period, for downlink transmission, determining a receiving beam of the terminal device corresponding to a sending beam of the network device indicated by the associated reference signal identifier to be adopted in the at least one sub-time period as a receiving beam for the terminal device to receive a signal; in the at least sub-time period, for uplink transmission, determining, by the terminal device, the sending beam of the terminal device according to a receiving beam of a reference signal corresponding to the associated reference signal identifier.

Optionally, the specified time period and the time granularity for the beam adjustment within the specified time period are determined according to specified configuration information, and the specified configuration information is specified by a protocol or pre-configured by the network device.

Optionally, the specified configuration information indicates a starting time point and an ending time point of the specified time period by at least one of: a radio frame serial number, a sub-frame serial number, a slot serial number, or a symbol serial number of data and/or a reference signal. The specified configuration information indicates the time granularity by at least one of: a number of radio frames, a number of sub-frames, a number of slots, or a number of symbols.

In a second aspect, embodiments of the present invention provide another method for determining a beam. The method is performed by a network device, and includes: sending beam indication information to a terminal device. The beam indication information indicates an associated reference signal identification sequence within a specified time period; an associated reference signal identifier in the associated reference signal identification sequence indicates a sending beam to be adopted by the network device; or an associated reference signal identifier in the associated reference signal identification sequence is for the terminal device to determine a sending beam of the terminal device.

Optionally, the apparatus further includes: receiving a beam measurement result reported by the terminal device, and determining the beam indication information according to the beam measurement result; or receiving at least one recommended associated reference signal identification sequence reported by the terminal device, and determining the beam indication information according to the at least one recommended associated reference signal identification sequence. The at least one recommended associated reference signal identification sequence is determined according to a beam measurement result.

Optionally, the beam measurement result includes: at least one measurement reference signal identifier, and at least one measurement result corresponding to each measurement reference signal identifier. The associated reference signal identifier is an identifier in the at least one measurement reference signal identifier.

Optionally, the measurement reference signal identifier includes at least one of: a measurement reference signal index, or an index of a time-frequency resource occupied by a measurement reference signal.

Optionally, the measurement result includes a measured value of at least one of: a reference signal receiving power (RSRP), a reference signal receiving quality (RSRQ), a received signal strength indication (RSSI), or a signal to interference plus noise ratio (SINR).

Optionally, the beam measurement result is obtained by the terminal device through receiving a measurement reference signal according to configuration information of the measurement reference signal and measuring the measurement reference signal. The configuration information of the measurement reference signal is specified by a protocol or pre-configured by the network device.

Optionally, the beam indication information includes: the associated reference signal identification sequence; or the beam indication information includes first M associated reference signal identifiers in the associated reference signal identification sequence, and a calculation function. The calculation function is used to calculate calculating subsequent associated reference signal identifiers in the associated reference signal identification sequence according to the first M associated reference signal identifiers.

Optionally, the method further includes: determining the associated reference signal identification sequence according to the beam indication information; determining an associated reference signal identifier to be adopted in at least one sub-time period within the specified time period according to the associated reference signal identification sequence, the specified time period, and a time granularity for beam adjustment within the specified time period; in the at least sub-time period, for downlink transmission, determining a sending beam of the network device indicated by the associated reference signal identifier to be adopted in the at least one sub-time period as a sending beam for the network device to send a signal; in the at least sub-time period, for uplink transmission, determining, by the network device, a receiving beam of the network device according to a sending beam of a reference signal corresponding to the associated reference signal identifier.

Optionally, the specified time period and the time granularity for the beam adjustment within the specified time period are determined according to specified configuration information; and the specified configuration information is specified by a protocol or pre-configured by the network device.

Optionally, the specified configuration information indicates a starting time point and an ending time point of the specified time period by at least one of: a radio frame serial number, a sub-frame serial number, a slot serial number, or a symbol serial number of data and/or a reference signal. The specified configuration information indicates the time granularity by at least one of: a number of radio frames, a number of sub-frames, a number of slots, or a number of symbols.

In a third aspect, embodiments of the present invention provide an apparatus for determining a beam. The apparatus is applicable to a terminal device, and includes: a transceiving unit, configured to receiving beam indication information sent by a network device. The beam indication information indicates an associated reference signal identification sequence within a specified time period; an associated reference signal identifier in the associated reference signal identification sequence indicates a sending beam to be adopted by the network device; or an associated reference signal identifier in the associated reference signal identification sequence is for the terminal device to determine a sending beam of the terminal device.

In a fourth aspect, embodiments of the present invention provide another apparatus for determining a beam. The apparatus is applicable to a network device, and includes: a transceiving unit, configured to send beam indication information to a terminal device. The beam indication information indicates an associated reference signal identification sequence within a specified time period; an associated reference signal identifier in the associated reference signal identification sequence indicates a sending beam to be adopted by the network device; or an associated reference signal identifier in the associated reference signal identification sequence is for the terminal device to determine a sending beam of the terminal device.

In a fifth aspect, embodiments of the present invention provide an apparatus for determining a beam. The apparatus includes: a processor; and a memory, having stored therein a computer program. The processor is configured to execute the computer program stored in the memory to cause the apparatus to perform the method according to embodiments of the present invention as described in the first aspect.

In a sixth aspect, embodiments of the present invention provide another apparatus for determining a beam. The apparatus includes: a processor; and a memory, having stored therein a computer program. The processor is configured to execute the computer program stored in the memory to cause the apparatus to perform the method according to embodiments of the present invention as described in the second aspect.

In a seventh aspect, embodiments of the present invention provide an apparatus for determining a beam. The apparatus includes: a processor; and an interface circuit, configured to receive a code instruction and transmit the code instruction to the processor. The processor is configured to run the code instruction to perform the method according to embodiments of the present invention as described in the first aspect.

In an eighth aspect, embodiments of the present invention provide another apparatus for determining a beam. The apparatus includes: a processor; and an interface circuit, configured to receive a code instruction and transmit the code instruction to the processor. The processor is configured to run the code instruction to perform the method according to embodiments of the present invention as described in the second aspect.

In a ninth aspect, embodiments of the present invention provide a computer-readable storage medium, having stored therein an instruction that, when executed, causes the method according to embodiments of the present invention as described in the first aspect to be performed.

In a tenth aspect, embodiments of the present invention provide another computer-readable storage medium, having stored therein an instruction that, when executed, causes the method according to embodiments of the present invention as described in the second aspect to be performed.

In an eleventh aspect, embodiments of the present invention provide a computer program product that, when run on a computer, causes the computer to perform the method according to embodiments of the present invention as described in the first aspect.

In a twelfth aspect, embodiments of the present invention provide another computer program product that, when run on a computer, causes the computer to perform the method according to embodiments of the present invention as described in the second aspect.

Additional aspects and advantages of embodiments of present invention will be given in part in the following descriptions, become apparent in part from the following descriptions, or be learned from the practice of the embodiments of the present invention.

**BRIEF** DESCRIPTION OF THE DRAWINGS

In order to clearly illustrate the technical solutions in embodiments of the present invention or in the related art, drawings to be used for the description of embodiments of the present invention or the related art are described below.

FIG. 1 is a schematic block diagram of a communication system according to embodiments of the present invention;
FIG. 2 is a schematic flowchart of a method for determining a beam according to embodiments of the present invention;
FIG. 3 is a schematic flowchart of another method for determining a beam according to embodiments of the present invention;
FIG. 4 is a schematic flowchart of another method for determining a beam according to embodiments of the present invention;
FIG. 5 is a schematic flowchart of another method for determining a beam according to embodiments of the present invention;
FIG. 6 is a schematic flowchart of another method for determining a beam according to embodiments of the present invention;

FIG. 7 is a schematic flowchart of another method for determining a beam according to embodiments of the present invention;

FIG. 8 is a schematic block diagram of an apparatus for determining a beam according to embodiments of the present invention;

FIG. 9 is a schematic block diagram of an apparatus for determining a beam according to embodiments of the present invention;

FIG. 10 is a schematic block diagram of a network device according to embodiments of the present invention; and

FIG. 11 is a schematic block diagram of a terminal device according to embodiments of the present invention.

## DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations described in the following illustrative embodiments do not represent all implementations consistent with the present invention. Instead, they are merely examples of apparatuses and methods consistent with some aspects of the present invention as recited in the appended claims.

Terms used in embodiments of the present invention are for the purpose of describing specific embodiments, but should not be construed to limit the present invention. As used in embodiments of the present invention and the appended claims, "a/an", "said" and "the" in singular forms are intended to include plural forms, unless clearly indicated in the context otherwise. It should also be understood that, the term "and/or" used herein represents and contains any one or any possible combinations of one or more associated items listed.

It should be understood that, although terms such as "first," "second" and "third" may be used in embodiments of the present invention for describing various information, these information should not be limited by these terms. These terms are used for distinguishing information of the same type from each other. For example, first information may also be referred to as second information, and similarly, the second information may also be referred to as the first information, without departing from the scope of embodiments of the present invention. Depending on the context, the term "if" as used herein may be construed to mean "when" or "upon" or "in response to determining".

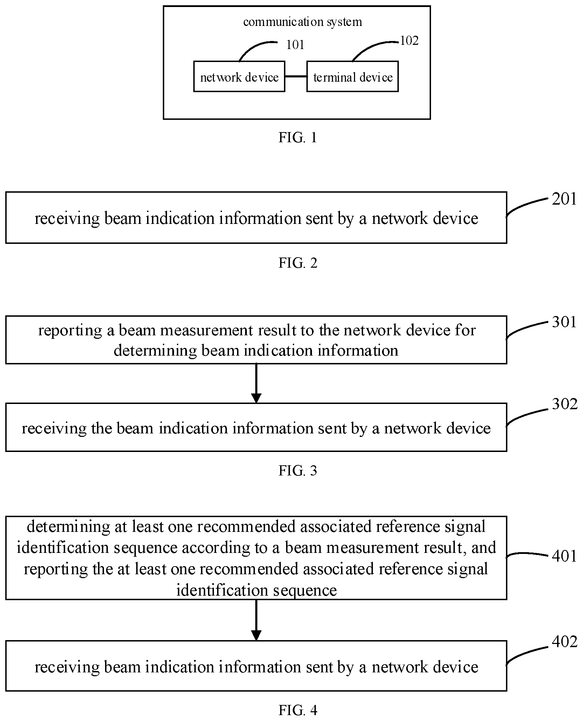

Referring to FIG. 1, FIG. 1 is a schematic architecture diagram of a communication system according to embodiments of the present invention. The communication system may include, but not limited to, a network device and a terminal device. The number and forms of the devices shown in FIG. 1 are only used as an example and do not constitute a limitation on embodiments of the present invention. The communication system may include two or more network devices and two or more terminal devices in practical applications. As an example for illustration, the communication system shown in FIG. 1 includes one network device and one terminal device.

It should be noted that the technical solutions of embodiments of the present invention may be applied to various communication systems, for example, a long term evolution (LTE) system, a 5th generation (5G) mobile communication system, a 5G new radio (NR) system, or other new mobile communication systems in the future.

The network device 101 in embodiments of the present invention is an entity at a network side for sending or receiving signals. For example, the network device 101 may be an evolved NodeB (eNB), a transmission reception point (may also be referred as transmit receive point, TRP), a next generation NodeB (gNB) in an NR system, a base station in other future mobile communication system, or an access node in a wireless fidelity (WiFi) system. Embodiments of the present invention do not limit the specific technique and specific device form adopted by the network device. The network device according to embodiments of the present invention may be composed of a central unit (CU) and distributed units (DUs). The CU may also be called a control unit. The CU-DU structure allows to split protocol layers of the network device, such as a base station, functions of some protocol layers are centrally controlled in the CU, functions of some or all of the remaining protocol layers are distributed in the DUs, and the CU centrally controls the DUs.

The terminal device 102 in embodiments of the present invention is an entity at a user side for receiving or sending signals, such as a mobile phone. The terminal device may also be called a terminal, a user equipment (UE), a mobile station (MS), a mobile terminal (MT), and so on. The terminal may be a device with a communication function, such as a car, a smart car, a mobile phone, a wearable device, a tablet Pad, a computer with a wireless transceiving function, a virtual reality (VR) terminal, an augmented reality (AR) terminal, a wireless terminal in an industrial control, a wireless terminal in a self-driving, a wireless terminal in a remote medical surgery, a wireless terminal in a smart grid, a wireless terminal in a transportation safety, a wireless terminal in a smart city, a wireless terminal in a smart home, etc. Embodiments of the present invention do not limit the specific technique and the specific device form adopted by the terminal device.

In terms of spectrum allocation of terahertz wireless communication, the international telecommunications union (ITU) has completed the allocation work of the spectral ranging from 100 to 275 GHz for various services, and the globally unified identification spectrum allocated for land mobile services and fixed services has a spectral bandwidth of 97.2 GHz. At the 2019 World Radio Conference (WRC-19), based on the WRC-15 resolution 767 and research results of WRC-19 topic 1.15, the conference additionally allocated four mobile service frequency bands identified globally from the frequency range of 275 to 450 GHz for the land mobile services and fixed services, namely frequency ranges from 275 to 296 GHz, from 306 to 313 GHz, from 318 to 333 GHz, and from 356 to 450 GHz, with a total spectrum bandwidth of 137 GHz.

It needs to be understood that at the same distance, the higher the frequency, the greater the path loss; and by reducing the beam width, the signal gain can be increased to avoid excessive path loss. In the above communication system, in order to deal with the challenges in path loss faced by high-frequency millimeter wave and terahertz communications, data transmission needs to be performed by using narrow beams. In the related art, beam indication information sent by a network device can indicate a sending beam to be adopted by the network device or a sending beam of the terminal device itself at a time point, and for each time point, the sending beam to be adopted by the network device or the sending beam to be adopted by the terminal device needs to be determined separately according to beam indication information, which reduces the beam prediction and tracking efficiency.

In view of the above problems, the present invention proposes a method and apparatus for determining a beam.

It can be understood that the communication system described in embodiments of the present invention is intended to illustrate the technical solutions of embodiments of the present invention more clearly, and does not constitute a limitation on the technical solutions according to embodiments of the present invention. Those of ordinary skill in the art understand that with the evolution of the system architecture and the emergence of new service scenarios, the technical solutions according to embodiments of the present invention are also applicable to similar technical problems.

The method and apparatus for determining a beam provided by the present invention will be described in detail below with reference to the accompanying drawings.

Referring to FIG. 2, FIG. 2 is a schematic flowchart of a method for determining a beam according to embodiments of the present invention. The method for determining a beam may be performed by the terminal device in the communication system shown in FIG. 1.

As shown in FIG. 2, the method for determining a beam may include the following steps.

In step 201, beam indication information sent by a network device is received.

The beam indication information indicates an associated reference signal identification sequence within a specified time period; and an associated reference signal identifier in the associated reference signal identification sequence indicates a sending beam to be adopted by the network device; or an associated reference signal identifier in the associated reference signal identification sequence is for the terminal device to determine a sending beam of the terminal device.

In embodiments of the present invention, the network device may send a measurement reference signal for beam measurement to the terminal device based on beams in a plurality of directions. The terminal device receives and measures the measurement reference signal sent by the network device to obtain a beam measurement result. It should be noted that, in order to maximize the signal gain, in embodiments of the present invention, the beam used for data transmission between the network device and the terminal device may be a narrow beam.

As an example, the terminal device reports the beam measurement result to the network device, and the network device determines the beam indication information according to the beam measurement result.

As another example, the terminal device determines at least one recommended associated reference signal identification sequence according to the beam measurement result, and reports the at least one recommended associated reference signal identification sequence to the network device. The network device determines the beam indication information according to the at least one recommended associated reference signal identification sequence.

Further, the network device sends the beam indication information to the terminal device, and the beam indication information indicates the associated reference signal identification sequence within the specified time period.

As an example, for downlink transmission, the associated reference signal identifier in the associated reference signal identification sequence indicates a sending beam to be adopted by the network device. The terminal device determines a corresponding receiving beam according to the sending beam to be adopted by the network device, to make it aligned with the sending beam to be adopted by the network device, so as to improve the accuracy of data transmission.

As another example, for uplink transmission, the terminal device determines its own sending beam based on beam reciprocity. That is, the terminal device can determines its own sending beam according to a receiving beam of a reference signal corresponding to the associated reference signal identifier in the associated reference signal identification sequence, thereby improving the accuracy of data transmission.

In summary, by receiving the beam indication information sent by the network device, the terminal device can determine the sending beam to be adopted by the network device within the specified time period, or determine its own sending beam within the specified time period, which improves the beam prediction and tracking efficiency.

Embodiments of the present invention provide another method for determining a beam. FIG. 3 is a schematic flowchart of another method for determining a beam according to embodiments of the present invention, and the method may be performed by the terminal device. The method may be performed separately, or may be performed in combination with any embodiment of the present invention or any possible implementations thereof, or may be performed in combination with any technical solution in the related art.

As shown in FIG. 3, the method for determining a beam may include the following steps.

In step 301, a beam measurement result is reported to the network device, and the beam measurement result is used to determine the beam indication information.

In embodiments of the present invention, the network device may send a measurement reference signal for beam measurement to the terminal device based on beams in a plurality of directions. The terminal device may receive the measurement reference signal according to configuration information of the measurement reference signal, and measure the measurement reference signal to obtain a beam measurement result. The configuration information of the measurement reference signal may be specified by a protocol or pre-configured by the network device. For example, the network device may send the configuration information of the measurement reference signal to the terminal device via a signaling.

It should be noted that the network device may send at least one measurement reference signal, and each measurement reference signal may correspond to a measurement reference signal identifier. For each measurement reference signal, the terminal device may measure the measurement reference signal at least one time to obtain at least one measurement result corresponding to the measurement reference signal. The beam measurement result may include at least one measurement reference signal identifier, and at least one measurement result corresponding to each measurement reference signal identifier. The measurement reference signal identifier may be at least one of: a measurement reference signal index or an index of a time-frequency resource occupied by a measurement reference signal. The measurement result includes a measured value of at least one of: a reference signal receiving power (RSRP), a reference signal receiving quality (RSRQ), a received signal strength indication (RSSI), or a signal to interference plus noise ratio (SINR).

In embodiments of the present invention, the network device may determine the beam indication information according to the beam measurement result within a set time period. For example, there are a plurality of beam measurement results within the set time period, for example, each measurement reference signal corresponds to one beam measurement result, and the beam indication information may be determined according to a beam measurement result with a highest measured value in the plurality of beam measurement results. For another example, for each measurement reference signal in a plurality of measurement reference signals within the set time period, the measurement reference signal may be measured a plurality of times to obtain a plurality of beam measurement results corresponding to the measurement reference signal, and a beam measurement result average value corresponding to the measurement reference signal may be determined according to the plurality of beam measurement results. Further, the beam indication information may be determined according to the beam measurement result average value corresponding to each measurement reference signal, for example, the beam indication information may be determined according to a largest beam measurement result average value in the plurality of beam measurement result average values. The above examples are for illustrative explanation, the present invention is not limited thereto.

In step 302, the beam indication information sent by the network device is received.

The beam indication information indicates an associated reference signal identification sequence within a specified time period; and an associated reference signal identifier in the associated reference signal identification sequence indicates a sending beam to be adopted by the network device; or an associated reference signal identifier in the associated reference signal identification sequence is for the terminal device to determine a sending beam of the terminal device.

In summary, by reporting the beam measurement result to the network device for determining the beam indication information, the network device can determine the beam indication information according to the beam measurement result reported by the terminal device.

Embodiments of the present invention provide another method for determining a beam.

FIG. 4 is a schematic flowchart of another method for determining a beam according to embodiments of the present invention, and the method may be performed by the terminal device. The method may be performed separately, or may be performed in combination with any embodiment of the present invention or any possible implementations thereof, or may be performed in combination with any technical solution in the related art.

As shown in FIG. 4, the method for determining a beam may include the following steps.

In step 401, at least one recommended associated reference signal identification sequence is determined according to a beam measurement result, and the at least one recommended associated reference signal identification sequence is reported.

The at least one recommended associated reference signal identification sequence is used to determine the beam indication information.

In embodiments of the present invention, the terminal device receives the measurement reference signal according to configuration information of the measurement reference signal, measures the measurement reference signal to obtain a beam measurement result, determines at least one recommended associated reference signal identification sequence according to the beam measurement result, and reports the at least one recommended associated reference signal identification sequence. The network device determines the beam indication information according to the at least one recommended associated reference signal identification sequence. It should be noted that the associated reference signal identifier may be an identifier in at least one measurement reference signal identifier.

For example, at least one recommended associated reference signal identification sequence is determined from the at least one measurement reference signal identifier according to the beam measurement result with the highest measured value in the beam measurement results within the set time period. Associated reference signal identifier(s) in the at least one recommended associated reference signal identification sequence may be the same associated reference signal identifier or may be a plurality of different associated reference signal identifiers, and the associated reference signal identifier(s) in the at least one recommended associated reference signal identification sequence is determined according to actual situations, which is not limited in the present invention.

In step 402, the beam indication information sent by the network device is received.

The beam indication information indicates an associated reference signal identification sequence within a specified time period; and an associated reference signal identifier in the associated reference signal identification sequence indicates a sending beam to be adopted by the network device; or an associated reference signal identifier in the associated reference signal identification sequence is for the terminal device to determine a sending beam of the terminal device.

In summary, the terminal device can determine at least one recommended associated reference signal identification sequence according to the beam measurement result, and report the at least one recommended associated reference signal identification sequence, so that the network device can determine the beam indication information according to the at least one recommended associated reference signal identification sequence reported by the terminal device.

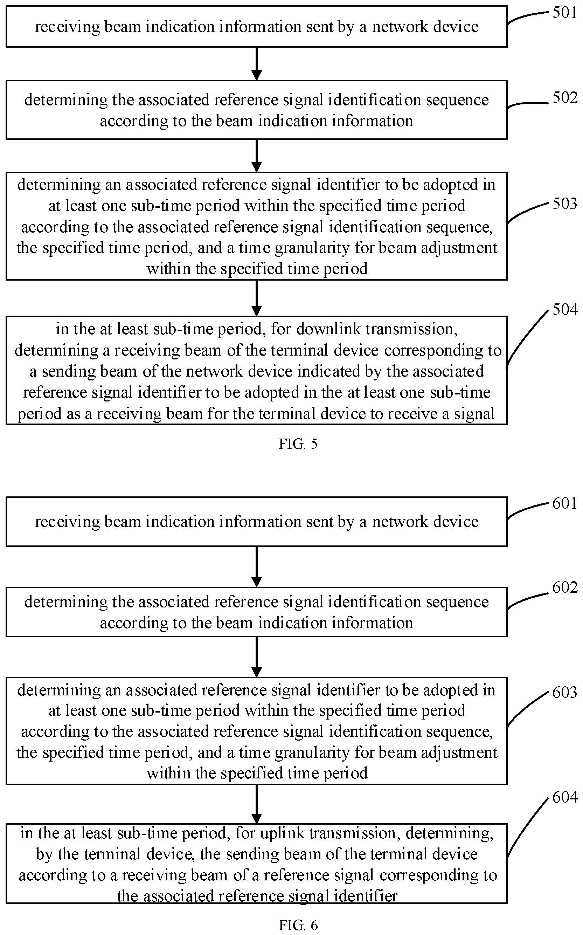

Embodiments of the present invention provide another method for determining a beam. FIG. 5 is a schematic flowchart of another method for determining a beam according to embodiments of the present invention, and the method may be performed by the terminal device. The method may be performed separately, or may be performed in combination with any embodiment of the present invention or any possible implementations thereof, or may be performed in combination with any technical solution in the related art.

As shown in FIG. 5, the method for determining a beam may include the following steps.

In step 501, beam indication information sent by a network device is received.

An associated reference signal identifier in an associated reference signal identification sequence indicates a sending beam to be adopted by the network device.

In step 502, the associated reference signal identification sequence is determined according to the beam indication information.

Optionally, the beam indication information includes: the associated reference signal identification sequence; or the beam indication information includes: first M associated reference signal identifiers in the associated reference signal identification sequence, and a calculation function; and the calculation function is used for calculating subsequent associated reference signal identifiers in the associated reference signal identification sequence according to the first M associated reference signal identifiers.

As an example, the beam indication information includes: the associated reference signal identification sequence, and the associated reference signal identification sequence can be determined according to the beam indication information. For example, the associated reference signal identification sequence may be [1, 1, 2, 3, 4...].

As another example, the beam indication information includes: the first M associated reference signal identifiers in the associated reference signal identification sequence, and the calculation function; and the calculation function is used for calculating subsequent associated reference signal identifiers in the associated reference signal identification sequence according to the first M associated reference signal identifiers.

For example, M is 2, and the first two associated reference signal identifiers in the associated reference signal identification sequence are f(1) and f(2), then the associated reference signal identifier f(3) in the associated reference signal identification sequence may be determined according to the associated reference signal identifiers f(1) and f(2). Similarly, the associated reference signal identifier in the associated reference signal identification sequence may be determined according to the associated reference signal identifier f(2) and the associated reference signal identifier f(3). The subsequent associated reference signal identifier may be expressed as a following formula:

$$f(n) = k_1 f(n-1) + k_2 f(n-2) + \ldots k_M f(n-M) \text{ ,}$$

where $k_1$, $k_2$ and $k_M$ are set coefficients, M represents the first M associated reference signal identifiers, and may be a set value, and $n$ is the $n^{th}$ associated reference signal identifier. Subsequently, $f(n)$ may be rounded, and the rounding manner may include: rounding down, rounding up, or rounding off.

In step 503, an associated reference signal identifier to be adopted in at least one sub-time period within the specified time period is determined according to the associated reference signal identification sequence, the specified time period, and a time granularity for beam adjustment within the specified time period.

Further, the specified time period is divided by using the time granularity for the beam adjustment within the specified time period to obtain at least one sub-time period within the specified time period, the at least one sub-time period can correspond to one or more associated reference signal identification subsequence in the associated reference signal identification sequence, and the associated reference signal identifier in the associated reference signal identification subsequence is used as the associated reference signal identifier to be adopted in a corresponding sub-time period. The associated reference signal identification sequence has a corresponding with the specified time period.

It should be noted that the specified time period and the time granularity for the beam adjustment within the specified time period are determined according to specified configuration information, and the specified configuration information is specified by a protocol or pre-configured by the network device. In this way, the associated reference signal identifier in the associated reference signal identification sequence within the specified time period may.

In addition, the specified configuration information may indicate a starting time point and an ending time point of the specified time period by at least one of: a radio frame serial number, a sub-frame serial number, a slot serial number, or a symbol serial number of data and/or a reference signal. The specified configuration information may indicate the time granularity by at least one of: a number of radio frames, a number of sub-frames, a number of slots, or a number of symbols.

In step 504, in a sub-time period, for downlink transmission, a receiving beam of the terminal device corresponding to a sending beam of the network device indicated by the associated reference signal identifier to be adopted in the sub-time period is determined as a receiving beam for the terminal device to receive a signal.

In embodiments of the present invention, in a sub-time period, for downlink transmission, the terminal device may determine the receiving beam for receiving a signal according to the receiving beam of the terminal device corresponding to the sending beam of the network device indicated by the associated reference signal identifier to be adopted in the sub-time period.

In summary, the associated reference signal identification sequence is determined according to the beam indication information; the associated reference signal identifier to be adopted in at least one sub-time period within the specified time period is determined according to the associated reference signal identification sequence, the specified time period, and the time granularity for beam adjustment within the specified time period; and in a sub-time period, for downlink transmission, the receiving beam of the terminal device corresponding to the sending beam of the network device indicated by the associated reference signal identifier to be adopted in the sub-time period is determined as the receiving beam for the terminal device to receive a signal. In this way, the terminal device can determine the receiving beam for receiving a signal according to the receiving beam of the terminal device corresponding to the sending beam of the network device, thereby improving the beam prediction and tracking efficiency.

Embodiments of the present invention provide another method for determining a beam. FIG. 6 is a schematic flowchart of another method for determining a beam according to embodiments of the present invention, and the method may be performed by the terminal device. The method may be performed separately, or may be performed in combination with any embodiment of the present invention or any possible implementations thereof, or may be performed in combination with any technical solution in the related art.

As shown in FIG. 6, the method for determining a beam may include the following steps.

In step 601, beam indication information sent by a network device is received.

An associated reference signal identifier in an associated reference signal identification sequence is used for the terminal device to determine a sending beam of the terminal device.

In step 602, the associated reference signal identification sequence is determined according to the beam indication information.

In step 603, an associated reference signal identifier to be adopted in at least one sub-time period within the specified time period is determined according to the associated reference signal identification sequence, the specified time period, and a time granularity for beam adjustment within the specified time period.

In step 604, in a sub-time period, for uplink transmission, the terminal device determines the sending beam of the terminal device according to a receiving beam of a reference signal corresponding to the associated reference signal identifier.

In embodiments of the present invention, in a sub-time period, for uplink transmission, the terminal device may determine a beam direction for data transmission between the network device and the terminal device according to a receiving beam of a measurement reference signal corresponding to the associated reference signal identifier, and determine the sending beam of the terminal device itself according to the beam direction based on beam reciprocity.

In summary, the associated reference signal identification sequence is determined according to the beam indication information; the associated reference signal identifier to be adopted in at least one sub-time period within the specified time period is determined according to the associated reference signal identification sequence, the specified time period, and the time granularity for beam adjustment within the specified time period; and in a sub-time period, for uplink transmission, the terminal device determines the sending beam of the terminal device itself according to the receiving beam of the reference signal corresponding to the associated reference signal identifier. In this way, the terminal device can determine the sending beam of the terminal device itself according to the receiving beam of the reference signal corresponding to the reference signal identifier, thereby improving the beam prediction and tracking efficiency.

In the method for determining a beam according to embodiments of the present invention, the terminal device receives the beam indication information sent by the network device, the beam indication information indicates the associated reference signal identification sequence within the specified time period; and the associated reference signal identifier in the associated reference signal identification sequence indicates the sending beam to be adopted by the network device; or the associated reference signal identifier in the associated reference signal identification sequence is for the terminal device to determine the sending beam of the terminal device. In this way, the terminal device can determine the sending beam to be adopted by the network device within the specified time period, or determine the sending beam of the terminal device itself within the specified time period according to the beam indication information sent by the network device, which improves the beam prediction and tracking efficiency.

It should be noted that the above possible implementations may be performed separately or in combination, which are not limited by embodiments of the present invention.

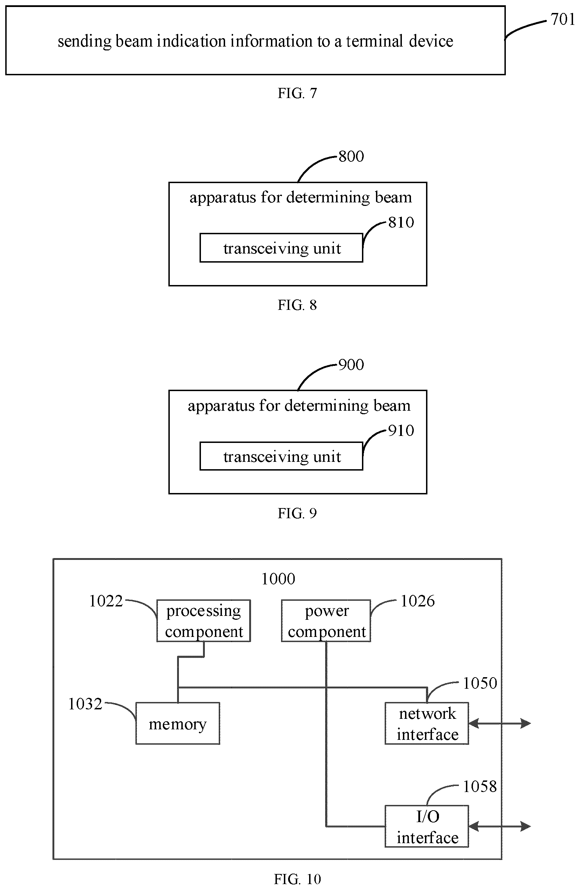

Embodiments of the present invention provide another method for determining a beam. FIG. 7 is a schematic flowchart of another method for determining a beam according to embodiments of the present invention, and the method may be performed by a network device.

As shown in FIG. 7, the method for determining a beam may include the following steps.

In step 701, beam indication information is sent to a terminal device.

The beam indication information indicates an associated reference signal identification sequence within a specified time period; and an associated reference signal identifier in the associated reference signal identification sequence indicates a sending beam to be adopted by the network device; or an associated reference signal identifier in the associated reference signal identification sequence is for the terminal device to determine a sending beam of the terminal device itself.

In embodiments of the present invention, the network device may send a measurement reference signal for beam measurement to the terminal device based on beams in a plurality of directions. The terminal device receives and measures the measurement reference signal sent by the network device to obtain a beam measurement result.

As an example, the terminal device reports the beam measurement result to the network device, and the network device determines the beam indication information according to the beam measurement result, and sends the beam indication information to the terminal device.

As another example, the terminal device determines at least one recommended associated reference signal identification sequence according to the beam measurement result, and reports the at least one recommended associated reference signal identification sequence to the network device. The network device determines the beam indication information according to the at least one recommended associated reference signal identification sequence, and sends the beam indication information to the terminal device.

The beam indication information indicates the associated reference signal identification sequence within the specified time period. As an example, for downlink transmission, the associated reference signal identifier in the associated reference signal identification sequence indicates a sending beam to be adopted by the network device. The terminal device determines a corresponding receiving beam according to the sending beam to be adopted by the network device, to make it aligned with the sending beam to be adopted by the network device, so as to improve the accuracy of data transmission.

As another example, for uplink transmission, the associated reference signal identifier in the associated reference signal identification sequence is for the terminal device to determine its own sending beam according to a receiving beam of a reference signal corresponding to the associated reference signal identifier, thereby improving the accuracy of data transmission.

In summary, the network device sends the beam indication information to the terminal device, and the terminal device determines the sending beam to be adopted by the network device within the specified time period according to the beam indication information, or the terminal device determines the sending beam of the terminal device within the specified time period according to the beam indication information, which improves the beam prediction and tracking efficiency.

As a possible implementation of embodiments of the present invention, the method for determining a beam further includes: receiving a beam measurement result reported by the terminal device, and determining the beam indication information according to the beam measurement result; or receiving at least one recommended associated reference signal identification sequence reported by the terminal device, and determining the beam indication information according to the at least one recommended associated reference signal identification sequence. The at least one recommended associated reference signal identification sequence is determined according to a beam measurement result.

As a possible implementation of embodiments of the present invention, the beam measurement result includes: at least one measurement reference signal identifier, and at least one measurement result corresponding to each measurement reference signal identifier. The associated reference signal identifier is an identifier in the at least one measurement reference signal identifier.

As a possible implementation of embodiments of the present invention, the measurement reference signal identifier includes at least one of: a measurement reference signal index or an index of a time-frequency resource occupied by a measurement reference signal.

As a possible implementation of embodiments of the present invention, the measurement result includes a measured value of at least one of: a reference signal receiving power (RSRP), a reference signal receiving quality (RSRQ), a received signal strength indication (RSSI), or a signal to interference plus noise ratio (SINR).

As a possible implementation of embodiments of the present invention, the beam measurement result is obtained by the terminal device through receiving a measurement reference signal according to configuration information of the measurement reference signal and measuring the measurement reference signal; and the configuration information of the measurement reference signal is specified by a protocol or pre-configured by the network device.

As a possible implementation of embodiments of the present invention, the beam indication information includes: the associated reference signal identification sequence. Alternatively, the beam indication information includes: first M associated reference signal identifiers in the associated reference signal identification sequence, and a calculation function. The calculation function is used to calculate subsequent associated reference signal identifiers in the associated reference signal identification sequence according to the first M associated reference signal identifiers.

As a possible implementation of embodiments of the present invention, the method for determining a beam further includes: determining the associated reference signal identification sequence according to the beam indication information; determining an associated reference signal identifier to be adopted in at least one sub-time period within the specified time period according to the associated reference signal identification sequence, the specified time period, and a time granularity for beam adjustment within the specified time period; in the at least sub-time period, for downlink transmission, determining a sending beam of the network device indicated by the associated reference signal identifier to be adopted in the at least one sub-time period as a sending beam for the network device to send a signal; in the at least sub-time period, for uplink transmission, determining, by the network device, a receiving beam of the network device according to a sending beam of a reference signal corresponding to the associated reference signal identifier.

As a possible implementation of embodiments of the present invention, the specified time period and the time granularity for the beam adjustment within the specified time period are determined according to specified configuration information; and the specified configuration information is specified by a protocol or pre-configured by the network device.

As a possible implementation of embodiments of the present invention, the specified configuration information indicates a starting time point and an ending time point of the specified time period by at least one of: a radio frame serial number, a sub-frame serial number, a slot serial number, or a symbol serial number of data and/or a reference signal. The specified configuration information indicates the time granularity by at least one of: a number of radio frames, a number of sub-frames, a number of slots, or a number of symbols.

It should be noted that the above possible implementations may be performed separately or in combination, which are not limited by embodiments of the present invention.

In the method for determining a beam according to embodiments of the present invention, the network device sends the beam indication information to the terminal device, the beam indication information indicates the associated reference signal identification sequence within the specified time period; and the associated reference signal identifier in the associated reference signal identification sequence indicates the sending beam to be adopted by the network device; or the associated reference signal identifier in the associated reference signal identification sequence is for the terminal device to determine the sending beam of the terminal device. In this way, the network device sends the beam indication information to the terminal device, so that the terminal device can determine the sending beam to be adopted by the network device within the specified time period according to the beam indication information, or the terminal device can determine the sending beam of the terminal device within the specified time period according to the beam indication information, which improves the beam prediction and tracking efficiency.

Corresponding to the method for determining a beam according to the above-mentioned embodiments described with reference to FIG. 2 to FIG. 6, the present invention also provides an apparatus for determining a beam. Since the apparatus for determining a beam according to embodiments of the present invention corresponds to the method for determining a beam according to the above-mentioned embodiments described with reference to FIG. 2 to FIG. 6, the implementations of the method for determining a beam are also applicable to the apparatus for determining a beam according to embodiments of the present invention, which will not be elaborated again in embodiments of the present invention.

FIG. 8 is a schematic block diagram of an apparatus for determining a beam according to embodiments of the present invention. The apparatus for determining a beam is applied to a terminal device.

As shown in FIG. 8, the apparatus 800 for determining a beam includes a transceiving unit 810.

The transceiving unit 810 is configured to receive beam indication information sent by a network device. The beam indication information indicates an associated reference signal identification sequence within a specified time period; an associated reference signal identifier in the associated reference signal identification sequence indicates a sending beam to be adopted by the network device; or an associated reference signal identifier in the associated reference signal identification sequence is for the terminal device to determine a sending beam of the terminal device.

As a possible implementation of embodiments of the present invention, the transceiving unit 810 is further configured to: report a beam measurement result to the network device for determining the beam indication information. Alternatively, the apparatus 800 further includes a processing unit, and the processing unit is configured to determine at least one recommended associated reference signal identification sequence according to a beam measurement result. The transceiving unit 810 is further configured to report the at least one recommended associated reference signal identification sequence, and the at least one recommended associated reference signal identification sequence is used to determine the beam indication information.

As a possible implementation of embodiments of the present invention, the beam measurement result includes: at least one measurement reference signal identifier, and at least one measurement result corresponding to each measurement reference signal identifier. The associated reference signal identifier is an identifier in the at least one measurement reference signal identifier.

As a possible implementation of embodiments of the present invention, the measurement reference signal identifier includes at least one of: a measurement reference signal index, or an index of a time-frequency resource occupied by a measurement reference signal.

As a possible implementation of embodiments of the present invention, the measurement result includes a measured value of at least one of: a reference signal receiving power (RSRP), a reference signal receiving quality (RSRQ), a received signal strength indication (RSSI), or a signal to interference plus noise ratio (SINR).

As a possible implementation of embodiments of the present invention, the beam measurement result is obtained by the terminal device through receiving a measurement reference signal according to configuration information of the measurement reference signal and measuring the measurement reference signal. The configuration information of the measurement reference signal is specified by a protocol or pre-configured by the network device.

As a possible implementation of embodiments of the present invention, the beam indication information includes: the associated reference signal identification sequence. Alternatively, the beam indication information includes: first M associated reference signal identifiers in the associated reference signal identification sequence, and a calculation function. The calculation function is used to calculate subsequent associated reference signal identifiers in the associated reference signal identification sequence according to the first M associated reference signal identifiers.

As a possible implementation of embodiments of the present invention, the processing unit is further configured to: determine the associated reference signal identification sequence according to the beam indication information; determine an associated reference signal identifier to be adopted in at least one sub-time period within the specified time period according to the associated reference signal identification sequence, the specified time period, and a time granularity for beam adjustment within the specified time period; in the at least sub-time period, for downlink transmission, determine a receiving beam of the terminal device corresponding to a sending beam of the network device indicated by the associated reference signal identifier to be adopted in the at least one sub-time period as a receiving beam for the terminal device to receive a signal; in the at least sub-time period, for uplink transmission, determine, by the terminal device, the sending beam of the terminal device according to a receiving beam of a reference signal corresponding to the associated reference signal identifier.

As a possible implementation of embodiments of the present invention, the specified time period and the time granularity for the beam adjustment within the specified time period are determined according to specified configuration information. The specified configuration information is specified by a protocol or pre-configured by the network device.

As a possible implementation of embodiments of the present invention, the specified configuration information indicates a starting time point and an ending time point of the specified time period by at least one of: a radio frame serial number, a sub-frame serial number, a slot serial number, or a symbol serial number of data and/or a reference signal. The specified configuration information indicates the time granularity by at least one of: a number of radio frames, a number of sub-frames, a number of slots, or a number of symbols.

The apparatus for determining a beam according to embodiments of the present invention is applicable to the terminal device. With the apparatus, the beam indication information sent by the network device is received, the beam indication information indicates the associated reference signal identification sequence within the specified time period; and the associated reference signal identifier in the associated reference signal identification sequence indicates the sending beam to be adopted by the network device; or the associated reference signal identifier in the associated reference signal identification sequence is for the terminal device to determine the sending beam of the terminal device. In this way, according to the beam indication information sent by the network device, the sending beam to be adopted by the network device within the specified time period may be determined, or the sending beam of the terminal device within the specified time period may be determined, which improves the beam prediction and tracking efficiency.

Corresponding to the method for determining a beam according to the above-mentioned embodiments described with reference to FIG. 7, the present invention also provides an apparatus for determining a beam. Since the apparatus for determining a beam according to embodiments of the present invention corresponds to the method for determining a beam according to the above-mentioned embodiments described with reference to FIG. 7, the implementations of the method for determining a beam are also applicable to the apparatus for determining a beam according to embodiments of the present invention, which will not be elaborated again in embodiments of the present invention.

FIG. 9 is a schematic block diagram of an apparatus for determining a beam according to embodiments of the present invention. The apparatus for determining a beam is applicable to a network device.

As shown in FIG. 9, the apparatus 900 for determining a beam includes a transceiving unit 910.

The transceiving unit 910 is configured to send beam indication information to a terminal device. The beam indication information indicates an associated reference signal identification sequence within a specified time period; an associated reference signal identifier in the associated reference signal identification sequence indicates a sending beam to be adopted by the network device; or an associated reference signal identifier in the associated reference signal identification sequence is for the terminal device to determine a sending beam of the terminal device.

As a possible implementation of embodiments of the present invention, the transceiving unit 910 is further configured to: receive a beam measurement result reported by the terminal device, and determine the beam indication information according to the beam measurement result. Alternatively, the apparatus 900 further includes a processing unit. The transceiving unit 910 is further configured to receive at least one recommended associated reference signal identification sequence reported by the terminal device. The processing unit is configured to determine the beam indication information according to the at least one recommended associated reference signal identification sequence. The at least one recommended associated reference signal identification sequence is determined according to a beam measurement result.

As a possible implementation of embodiments of the present invention, the beam measurement result includes: at least one measurement reference signal identifier, and at least one measurement result corresponding to each measurement reference signal identifier. The associated reference signal identifier is an identifier in the at least one measurement reference signal identifier.

As a possible implementation of embodiments of the present invention, the measurement reference signal identifier includes at least one of: a measurement reference signal index, or an index of a time-frequency resource occupied by a measurement reference signal.

As a possible implementation of embodiments of the present invention, the measurement result includes a measured value of at least one of: a reference signal receiving power (RSRP), a reference signal receiving quality (RSRQ), a received signal strength indication (RSSI), or a signal to interference plus noise ratio (SINR).

As a possible implementation of embodiments of the present invention, the beam measurement result is obtained by the terminal device through receiving a measurement reference signal according to configuration information of the measurement reference signal and measuring the measurement reference signal. The configuration information of the measurement reference signal is specified by a protocol or pre-configured by the network device.

As a possible implementation of embodiments of the present invention, the beam indication information includes the associated reference signal identification sequence. Alternatively, the beam indication information includes: first M associated reference signal identifiers in the associated reference signal identification sequence, and a calculation function. The calculation function is used to calculate subsequent associated reference signal identifiers in the associated reference signal identification sequence according to the first M associated reference signal identifiers.

As a possible implementation of embodiments of the present invention, the processing unit is further configured to: determine the associated reference signal identification sequence according to the beam indication information; determine an associated reference signal identifier to be adopted in at least one sub-time period within the specified time period according to the associated reference signal identification sequence, the specified time period, and a time granularity for beam adjustment within the specified time period; in the at least sub-time period, for downlink transmission, determine a sending beam of the network device indicated by the associated reference signal identifier to be adopted in the at least one sub-time period as a sending beam for the network device to send a signal; in the at least sub-time period, for uplink transmission, determine, by the network device, a receiving beam of the network device according to a sending beam of a reference signal corresponding to the associated reference signal identifier.

As a possible implementation of embodiments of the present invention, the specified time period and the time granularity for the beam adjustment within the specified time period are determined according to specified configuration information. The specified configuration information is specified by a protocol or pre-configured by the network device.

As a possible implementation of embodiments of the present invention, the specified configuration information indicates a starting time point and an ending time point of the specified time period by at least one of: a radio frame serial number, a sub-frame serial number, a slot serial number, or a symbol serial number of data and/or a reference signal. The specified configuration information indicates the time granularity by at least one of: a number of radio frames, a number of sub-frames, a number of slots, or a number of symbols.

The apparatus for determining a beam according to embodiments of the present invention is applicable to the network device. With the apparatus, the beam indication information is sent to the terminal device, the beam indication information indicates the associated reference signal identification sequence within the specified time period; and the associated reference signal identifier in the associated reference signal identification sequence indicates the sending beam to be adopted by the network device; or the associated reference signal identifier in the associated reference signal identification sequence is for the terminal device to determine the sending beam of the terminal device. In this way, the beam indication information is sent to the terminal device, so that the terminal device can determine the sending beam to be adopted by the network device within the specified time period according to the beam indication information, or the terminal device can determine the sending beam of the terminal device within the specified time period according to the beam indication information, which improves the beam prediction and tracking efficiency.

In order to implement the above embodiments, the present invention also provides an apparatus for determining a beam. The apparatus includes: a processor; and a memory, having stored therein a computer program. The processor is configured to execute the computer program stored in the memory to cause the apparatus to perform the method according to embodiments of the present invention as described with reference to FIG. 2 to FIG. 6.

In order to implement the above embodiments, the present invention also provides another apparatus for determining a beam. The apparatus includes: a processor; and a memory, having stored therein a computer program. The processor is configured to execute the computer program stored in the memory to cause the apparatus to perform the method according to embodiments of the present invention as described with reference to FIG. 7.

In order to implement the above embodiments, the present invention also provides a method for determining a beam. The apparatus includes: a processor; and an interface circuit, configured to receive a code instruction and transmit the code instruction to the processor. The processor is configured to run the code instruction to perform the method according to embodiments of the present invention as described with reference to FIG. 2 to FIG. 6.

In order to implement the above embodiments, the present invention also provides another method for determining a beam. The apparatus includes: a processor; and an interface circuit, configured to receive a code instruction and transmit the code instruction to the processor. The processor is configured to run the code instruction to perform the method according to embodiments of the present invention as described with reference to FIG. 7.

In order to implement the above embodiments, the present invention also provides a computer-readable storage medium, having stored therein an instruction that, when executed, causes the method according to embodiments of the present invention as described with reference to FIG. 2 to FIG. 6 to be performed.

In order to implement the above embodiments, the present invention also provides another computer-readable storage medium, having stored therein an instruction that, when executed, causes the method according to embodiments of the present invention as described with reference to FIG. 7 to be performed.

As shown in FIG. 10, FIG. 10 is a schematic block diagram of a network device according to embodiments of the present invention. Referring to FIG. 10, the network device 1000 includes a processing component 1022, which further includes at least one processor, and a memory resource represented by a memory 1032 configured to store instructions executable by the processing component 1022, such as application programs. The application programs stored in the memory 1032 may include one or more modules each corresponding to a set of instructions. In addition, the processing component 1022 is configured to execute instructions to perform any method performed by the network device as described above, for example, the method described in embodiments with reference to FIG. 7.

The network device 1000 may also include a power component 1026 configured to perform the power management of the network device 1000, a wired or wireless network interfaces 1050 configured to connect the network device 1000 to a network, and an input-output (I/O) interface 1058. The network device 1000 may operate based on an operating system stored in the memory 1032, such as Windows Server TM, Mac OS XTM, UnixTM, LinuxTM, FreeBSDTM, or the like.

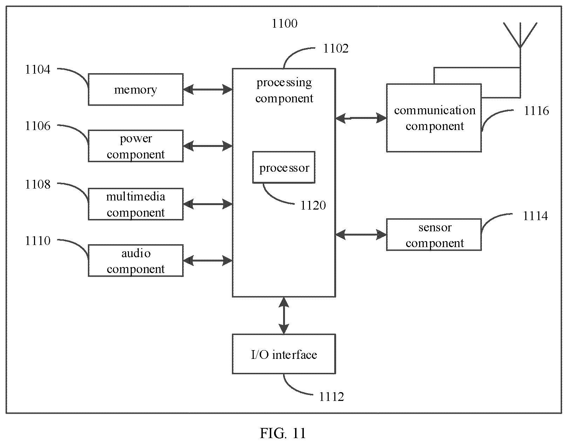

FIG. 11 is a schematic block diagram of a terminal device 1100 according to embodiments of the present invention. For example, the terminal device 1100 may be a mobile phone, a computer, a digital broadcast terminal, a messaging device, a game console, a tablet device, a medical device, a fitness device, a personal digital assistant, or the like.

Referring to FIG. 11, the terminal device 1100 may include at least one of the following components: a processing component 1102, a memory 1104, a power component 1106, a multimedia component 1108, an audio component 1110, an input/output (I/O) interface 1112, a sensor component 1114, and a communication component 1116.

The processing component 1102 typically controls overall operations of the terminal device 1100, such as the operations associated with display, phone calls, data communications, camera operations, and recording operations. The processing component 1102 can include at least one processor 1120 to execute instructions to perform all or some of the steps in the above-described methods. Moreover, the processing component 1102 may include at least one module which facilitates the interaction between the processing component 1102 and other components. For instance, the processing component 1102 may include a multimedia module to facilitate the interaction between the multimedia component 1108 and the processing component 1102.

The memory 1104 is configured to store various types of data to support the operation of the terminal device 1100. Examples of such data include instructions for any applications or methods operated on the terminal device 1100, contact data, phonebook data, messages, pictures, videos, etc. The memory 1104 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1106 provides power to various components of the terminal device 1100. The power component 1106 may include a power management system, at least one power source, and any other components associated with the generation, management, and distribution of power in the terminal device 1100.

The multimedia component 1108 includes a screen providing an output interface between the terminal device 1100 and the user. In some embodiments, the screen may include a liquid crystal display (LCD) and a touch panel (TP). If the screen includes the touch panel, the screen may be implemented as a touch screen to receive input signals from the user. The touch panel includes at least one touch sensor to sense touches, swipes, and gestures on the touch panel. The touch sensors may not only sense a boundary of a touch or swipe action, but also sense the wake time and pressure associated with the touch or swipe action. In some embodiments, the multimedia component 1108 includes a front camera and/or a rear camera. The front camera and/or the rear camera may receive an external multimedia datum while the terminal device 1100 is in an operation mode, such as a photographing mode or a video mode. Each of the front camera and the rear camera may be a fixed optical lens system or have focus and optical zoom capability.

The audio component 1110 is configured to output and/or input audio signals. For example, the audio component 1110 includes a microphone (MIC) configured to receive an external audio signal when the terminal device 1100 is in an operation mode, such as a call mode, a recording mode, and a voice recognition mode. The received audio signal may be further stored in the memory 1804 or transmitted via the communication component 1116. In some embodiments, the audio component 1110 further includes a speaker to output audio signals.

The I/O interface 1112 provides an interface between the processing component 1102 and peripheral interface modules, such as keyboards, click wheels, buttons, and the like. The buttons may include, but are not limited to, a home button, a volume button, a starting button, and a locking button.

The sensor component 1114 includes at least one sensor to provide status assessments of various aspects of the terminal device 1100. For instance, the sensor component 1114 may detect an open/closed status of the terminal device 1100, relative positioning of components, e.g., the display and the keypad, of the terminal device 1100, a change in position of the terminal device 1100 or a component of the terminal device 1100, a presence or absence of user contact with the terminal device 1100, an orientation or an acceleration/deceleration of the terminal device 1100, and a change in temperature of the terminal device 1100. The sensor component 1114 may include a proximity sensor configured to detect the presence of nearby objects without any physical contact. The sensor component 1114 may further include a light sensor, such as a CMOS or CCD image sensor, for use in imaging applications. In some embodiments, the sensor component 1114 may further include an accelerometer sensor, a gyroscope sensor, a magnetic sensor, a pressure sensor, or a temperature sensor.

The communication component 1116 is configured to facilitate communication, wired or wireless, between the terminal device 1100 and other devices. The terminal device 1100 can access a wireless network based on a communication standard, such as Wi-Fi, 2G, or 3G, or a combination thereof. In an illustrative embodiment, the communication component 1116 receives a broadcast signal or broadcast associated information from an external broadcast management system via a broadcast channel. In an illustrative embodiment, the communication component 1116 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the terminal device 1100 may be implemented with at least one application specific integrated circuit (ASIC), digital signal processor (DSP), digital signal processing device (DSPD), programmable logic device (PLD), field programmable gate array (FPGA), controller, micro-controller, microprocessor, or other electronic element, for performing the method as described above with reference to FIG.2 to FIG. 6.

In an illustrative embodiment, there is also provided a non-transitory computer readable storage medium including instructions, such as included in the memory 1104, executable by the processor 1120 in the terminal device 1100, for performing the method as described above with reference to FIG.2 to FIG. 6. For example, the non-transitory computer-readable storage medium may be a ROM, a random access memory (RAM), a CD-ROM, a magnetic tape, a floppy disc, an optical data storage device, and the like.

Other embodiments of the present invention will be apparent to those skilled in the art from consideration of the specification and practice of the disclosure disclosed here. The present invention is intended to cover any variations, uses, or adaptations of the present invention following the general principles thereof and including such departures from the present invention as come within known or customary practice in the art. It is intended that the specification and examples be considered as illustrative only, with a true scope and spirit of the present invention being indicated by the following claims.

It will be appreciated that the present invention is not limited to the exact construction that has been described above and illustrated in the accompanying drawings, and that various modifications and changes can be made without departing from the scope thereof. It is intended that the scope of the present invention only be limited by the appended claims.

In order to implement the above embodiments, embodiments of the present invention also provide a communication apparatus. The communication apparatus may be a network device, may also be a user equipment, may also be a chip, a chip system, or a processor that supports the network device to implement the above method, or may also be a chip, a chip system, or a processor that supports the user equipment to implement the above method. The apparatus may be used to implement the method as described in any method embodiment above, and for details, reference may be made to the descriptions on the above method embodiments.

The communication apparatus may include one or more processors. The processor may be a general-purpose processor or a special-purpose processor. For example, it may be a baseband processor or a central processing unit. The baseband processor may be configured to process a communication protocol and communication data, and the central processing unit may be configured to control a communication apparatus (such as a base station, a baseband chip, a user equipment, a user equipment chip, a DU or a CU, etc.), execute computer programs, and process data of computer programs.

Optionally, the communication apparatus may further include one or more memories that may have stored therein a computer program. The processor executes the computer program to cause the communication apparatus to implement the methods as described in the above method embodiments. Optionally, the memory may have stored therein data. The communication apparatus and the memory may be set separately or integrated together.

Optionally, the communication apparatus may further include a transceiver and an antenna. The transceiver may be called a transceiving unit, a transceiving machine, a transceiving circuit or the like, for implementing a transceiving function. The transceiver may include a receiver and a transmitter. The receiver may be called a receiving machine, a receiving circuit or the like, for implementing a receiving function. The transmitter may be called a sending machine, a sending circuit or the like for implementing a sending function.

Optionally, the communication apparatus may further include one or more interface circuits. The interface circuit is configured to receive a code instruction and transmit the code instruction to the processor. The processor runs the code instruction to enable the communication apparatus to execute the method as described in any foregoing method embodiment.

In an implementation, the processor may include the transceiver configured to implement receiving and sending functions. For example, the transceiver may be a transceiving circuit, an interface, or an interface circuit. The transceiving circuit, the interface or the interface circuit for implementing the receiving and sending functions may be separated or integrated together. The above transceiving circuit, interface or interface circuit may be configured to read and write codes/data, or the above transceiving circuit, interface or interface circuit may be configured to transmit or transfer signals.

In an implementation, the processor may have stored therein a computer program that, when run on the processor, causes the communication apparatus to implement the method as described in any foregoing method embodiment. The computer program may be solidified in the processor, and in this case, the processor may be implemented by hardware.

In an implementation, the communication apparatus may include a circuit, and the circuit may implement the sending, receiving or communicating function in the foregoing method embodiments. The processor and the transceiver described in the present invention may be implemented on an integrated circuit (IC), an analog IC, a radio frequency integrated circuit (RFIC), a mixed-signal IC, an application specific integrated circuit (ASIC), a printed circuit board (PCB), an electronic device, etc. The processor and the transceiver may also be manufactured using various IC process technologies, such as a complementary metal oxide semiconductor (CMOS), an nMetal-oxide-semiconductor (NMOS), a positive channel metal oxide semiconductor (PMOS, a P-type metal oxide semiconductor), a bipolar junction transistor (BJT), a bipolar CMOS (BiCMOS), silicon germanium (SiGe), gallium arsenide (GaAs), etc.

The communication apparatus described in the above embodiments may be the network device or the user equipment, but the scope of the communication apparatus described in the present invention is not limited thereto. The communication apparatus may be a stand-alone device or may be a part of a larger device. For example, the communication apparatus may be:

(1) a stand-alone integrated circuit (IC), a chip, or a chip system or a subsystem;
(2) a set of one or more ICs, optionally, the set of ICs may also include a storage component for storing data and computer programs;
(3) an ASIC, such as a modem;
(4) a module that may be embedded in other devices;
(5) a receiver, a user equipment, an intelligent user equipment, a cellular phone, a wireless device, a handheld machine, a mobile unit, a vehicle device, a network device, a cloud device, an artificial intelligence device, etc.;
(6) others.

For the case where the communication apparatus may be a chip or a chip system, the chip may include a processor and an interface. In the chip, one or more processors may be provided, and more than one interface may be provided.

Optionally, the chip further includes a memory for storing necessary computer programs and data.

Those skilled in the art may also understand that various illustrative logical blocks and steps listed in embodiments of the present invention may be implemented by electronic hardware, computer software, or a combination thereof. Whether such functions are implemented by hardware or software depends on specific applications and design requirements of an overall system. For each specific application, those skilled in the art may use various methods to implement the described functions, but such implementation should not be understood as beyond the protection scope of embodiments of the present invention.

The present invention also provides a computer program product that, when executed by a computer, causes functions of the embodiments described with reference to FIG. 3 to FIG. 13 to be implemented.

The present invention also provides a computer program product that, when executed by a computer, causes functions of the embodiments described with reference to FIG. 14 to be implemented.

The above embodiments may be implemented in whole or in part by software, hardware, firmware or any combination thereof. When implemented using the software, the above embodiments may be implemented in whole or in part in a form of the computer program product. The computer program product includes one or more computer programs. When the computer program is loaded and executed on the computer, all or part of the processes or functions according to embodiments of the present invention will be generated. The computer may be a general purpose computer, a special purpose computer, a computer network, or other programmable devices. The computer program may be stored in a computer-readable storage medium or transmitted from one computer-readable storage medium to another computer-readable storage medium. For example, the computer program may be transmitted from one website site, computer, server or data center to another website site, computer, server or data center in a wired manner (such as via a coaxial cable, an optical fiber, a digital subscriber line (DSL)) or a wireless manner (such as via infrared, wireless, or microwave, etc.). The computer-readable storage medium may be any available medium that can be accessed by the computer, or a data storage device such as a server or a data center integrated by one or more available media. The available medium may be a magnetic medium (for example, a floppy disk, a hard disk, or a magnetic tape), an optical medium (for example, a high-density digital video disc (DVD)), or a semiconductor medium (for example, a solid state disk (SSD)) etc.

Those of ordinary skill in the art can understand that the first, second, and other numeral numbers involved in the present invention are only for convenience of description, and are not intended to limit the scope of embodiments of the present invention, nor are they intended to represent a sequential order.

The term "at least one" used in the present invention may also be described as one or more, and the term "a plurality of" may cover two, three, four or more, which are not limited in the present invention. In embodiments of the present invention, for a certain kind of technical features, the technical features in this kind of technical features are distinguished by terms like "first", "second", "third", "A", "B", "C" and "D", etc., and these technical features described with the "first", "second", "third", "A", "B", "C" and "D" have no order of priority and have no order of size.

The correspondence shown in each table in the present invention may be configured or predefined. The values of various information in each table are just examples, and may be configured as other values, which are not limited in the present invention. When configuring a correspondence between the information and various parameters, it is not necessary to configure all the correspondences shown in the tables. For example, the correspondences shown in some rows of a table in the present invention may not be configured. For another example, appropriate deformations or adjustments (such as splitting, merging, and so on) can be made based on the above table. The names of parameters shown in the titles of the above tables may also adopt other names understandable by the communication apparatus, and the values or representations of the parameters may also be other values or representations understandable by the communication apparatus. When the above tables are implemented, other data structures may also be used, for example, arrays, queues, containers, stacks, linear tables, pointers, linked lists, trees, graphs, structural body, classes, heaps, or hash tables may be used.

The term "predefinition" in the present invention may be understood as definition, definition in advance, storage, pre-storage, pre-negotiation, pre-configuration, curing, or pre-firing.

Those of ordinary skill in the art can appreciate that the units and algorithm steps of various examples described in conjunction with embodiments disclosed herein may be implemented by the electronic hardware, or a combination of the computer software and the electronic hardware. Whether these functions are executed by the hardware or the software depends on the specific applications and design constraints of the technical solution. For each particular application, those skilled in the art may use different methods to implement the described functions, but such implementation should not be considered beyond the scope of the present invention.

Those skilled in the art can clearly understand that for the convenience and brevity of the description, the specific working process of the above-described system, device and unit may refer to the corresponding process in the foregoing method embodiments, which will not be repeated here.

The above only describes some specific implementations of the present invention, but the protection scope of the present invention is not limited thereto. Any changes or substitutions that are conceivable to those skilled in the art within the technical scope of the present invention should fall within the protection scope of the present invention. Therefore, the protection scope of the present invention should be determined by the protection scope of the claims.

**Claims**

1. A method for determining a beam, performed by a terminal device, comprising:

    receiving beam indication information sent by a network device,
    wherein the beam indication information indicates an associated reference signal identification sequence within a specified time period;
    an associated reference signal identifier in the associated reference signal identification sequence indicates a sending beam to be adopted by the network device; or
    an associated reference signal identifier in the associated reference signal identification sequence is for the terminal device to determine a sending beam of the terminal device.

2. The method according to claim 1, further comprising:

    reporting a beam measurement result to the network device for determining the beam indication information; or
    determining at least one recommended associated reference signal identification sequence according to a beam measurement result, and reporting the at least one recommended associated reference signal identification sequence for determining the beam indication information.

3. The method according to claim 2, wherein the beam measurement result comprises: at least one measurement reference signal identifier, and at least one measurement result corresponding to each measurement reference signal identifier;
    wherein the associated reference signal identifier is an identifier in the at least one measurement reference signal identifier.

4. The method according to claim 3, wherein the measurement reference signal identifier comprises at least one of: a measurement reference signal index or an index of a time-frequency resource occupied by a measurement reference signal.

5. The method according to claim 3, wherein the measurement result comprises a measured value of at least one of: a reference signal receiving power (RSRP), a reference signal receiving quality (RSRQ), a received signal strength indication (RSSI), or a signal to interference plus noise ratio (SINR).

6. The method according to claim 2, wherein the beam measurement result is obtained by the terminal device through receiving a measurement reference signal according to configuration information of the measurement reference signal and measuring the measurement reference signal;
    the configuration information of the measurement reference signal is specified by a protocol or pre-configured by the network device.

7. The method according to claim 1, wherein the beam indication information comprises:

    the associated reference signal identification sequence; or
    first M associated reference signal identifiers in the associated reference signal identification sequence, and a calculation function for calculating subsequent associated reference signal identifiers in the associated reference signal identification sequence according to the first M associated reference signal identifiers.

8. The method according to claim 1 or 7, further comprising:

    determining the associated reference signal identification sequence according to the beam indication information;
    determining an associated reference signal identifier to be adopted in at least one sub-time period within the specified time period according to the associated reference signal identification sequence, the specified time period, and a time granularity for beam adjustment within the specified time period;
in the at least sub-time period, for downlink transmission, determining a receiving beam of the terminal device corresponding to a sending beam of the network device indicated by the associated reference signal identifier to be adopted in the at least one sub-time period as a receiving beam for the terminal device to receive a signal;
for uplink transmission, determining, by the terminal device, the sending beam of the terminal device according to a receiving beam of a reference signal corresponding to the associated reference signal identifier.

9. The method according to claim 8, wherein the specified time period and the time granularity for the beam adjustment within the specified time period are determined according to specified configuration information;
wherein the specified configuration information is specified by a protocol or pre-configured by the network device.

10. The method according to claim 9, wherein the specified configuration information indicates a starting time point and an ending time point of the specified time period by at least one of: a radio frame serial number, a sub-frame serial number, a slot serial number, or a symbol serial number of data and/or a reference signal;
the specified configuration information indicates the time granularity by at least one of: a number of radio frames, a number of sub-frames, a number of slots, or a number of symbols.

11. A method for determining a beam, performed by a network device, comprising:

sending beam indication information to a terminal device,
wherein the beam indication information indicates an associated reference signal identification sequence within a specified time period;
an associated reference signal identifier in the associated reference signal identification sequence indicates a sending beam to be adopted by the network device; or
an associated reference signal identifier in the associated reference signal identification sequence is for the terminal device to determine a sending beam of the terminal device.

12. The method according to claim 11, further comprising:

receiving a beam measurement result reported by the terminal device, and determining the beam indication information according to the beam measurement result; or
receiving at least one recommended associated reference signal identification sequence reported by the terminal device, and determining the beam indication information according to the at least one recommended associated reference signal identification sequence; wherein the at least one recommended associated reference signal identification sequence is determined according to a beam measurement result.

13. The method according to claim 12, wherein the beam measurement result comprises: at least one measurement reference signal identifier, and at least one measurement result corresponding to each measurement reference signal identifier;
wherein the associated reference signal identifier is an identifier in the at least one measurement reference signal identifier.

14. The method according to claim 13, wherein the measurement reference signal identifier comprises at least one of: a measurement reference signal index or an index of a time-frequency resource occupied by a measurement reference signal.

15. The method according to claim 13, wherein the measurement result comprises a measured value of at least one of: a reference signal receiving power (RSRP), a reference signal receiving quality (RSRQ), a received signal strength indication (RSSI), or a signal to interference plus noise ratio (SINR).

16. The method according to claim 12, wherein the beam measurement result is obtained by the terminal device through receiving a measurement reference signal according to configuration information of the measurement reference signal and measuring the measurement reference signal;
the configuration information of the measurement reference signal is specified by a protocol or pre-configured by the network device.

17. The method according to claim 11, wherein the beam indication information comprises:

the associated reference signal identification sequence; or
first M associated reference signal identifiers in the associated reference signal identification sequence, and a calculation function for calculating subsequent associated reference signal identifiers in the associated reference signal identification sequence according to the first M associated reference signal identifiers.

18. The method according to claim 11 or 17, further comprising:

determining the associated reference signal identification sequence according to the beam indication information;
determining an associated reference signal identifier to be adopted in at least one sub-time period within the specified time period according to the associated reference signal identification sequence, the specified time period, and a time granularity for beam adjustment within the specified time period;
in the at least sub-time period, for downlink transmission, determining a sending beam of the network device indicated by the associated reference signal identifier to be adopted in the at least one sub-time period as a sending beam for the network device to send a signal;
for uplink transmission, determining, by the network device, a receiving beam of the network device according to a sending beam of a reference signal corresponding to the associated reference signal identifier.

19. The method according to claim 18, wherein the specified time period and the time granularity for the beam adjustment within the specified time period are determined according to specified configuration information;
wherein the specified configuration information is specified by a protocol or pre-configured by the network device.

20. The method according to claim 19, wherein the specified configuration information indicates a starting time point and an ending time point of the specified time period by at least one of: a radio frame serial number, a sub-frame serial number, a slot serial number, or a symbol serial number of data and/or a reference signal;
the specified configuration information indicates the time granularity by at least one of: a number of radio frames, a number of sub-frames, a number of slots, or a number of symbols.

21. An apparatus for determining a beam, applicable to a terminal device, comprising:

a transceiving unit, configured to receiving beam indication information sent by a network device,
wherein the beam indication information indicates an associated reference signal identification sequence within a specified time period;
an associated reference signal identifier in the associated reference signal identification sequence indicates a sending beam to be adopted by the network device; or
an associated reference signal identifier in the associated reference signal identification sequence is for the terminal device to determine a sending beam of the terminal device.

22. An apparatus for determining a beam, applicable to a network device, comprising:

a transceiving unit, configured to send beam indication information to a terminal device,
wherein the beam indication information indicates an associated reference signal identification sequence within a specified time period;
an associated reference signal identifier in the associated reference signal identification sequence indicates a sending beam to be adopted by the network device; or
an associated reference signal identifier in the associated reference signal identification sequence is for the terminal device to determine a sending beam of the terminal device.

23. An apparatus for determining a beam, comprising:

a processor; and
a memory, having stored therein a computer program,
wherein the processor is configured to execute the computer program stored in the memory to cause the apparatus to perform the method according to any one of claims 1 to 10.

24. An apparatus for determining a beam, comprising:

a processor; and

a memory, having stored therein a computer program,
wherein the processor is configured to execute the computer program stored in the memory to cause the apparatus to perform the method according to any one of claims 11 to 20.

25. An apparatus for determining a beam, comprising:

a processor; and
an interface circuit, configured to receive a code instruction and transmit the code instruction to the processor;
wherein the processor is configured to run the code instruction to perform the method according to any one of claims 1 to 10.

26. An apparatus for determining a beam, comprising:

a processor; and
an interface circuit, configured to receive a code instruction and transmit the code instruction to the processor;
wherein the processor is configured to run the code instruction to perform the method according to any one of claims **11** to 20.

27. A computer-readable storage medium, having stored therein an instruction that, when executed, causes the method according to any one of claims 1 to 10 to be performed.

28. A computer-readable storage medium, having stored therein an instruction that, when executed, causes the method according to any one of claims **11** to 20 to be performed.

communication system

network device ——— terminal device

101

102

FIG. 1

receiving beam indication information sent by a network device

201

FIG. 2

reporting a beam measurement result to the network device for determining beam indication information

301

receiving the beam indication information sent by a network device

302

FIG. 3

determining at least one recommended associated reference signal identification sequence according to a beam measurement result, and reporting the at least one recommended associated reference signal identification sequence

401

receiving beam indication information sent by a network device

402

FIG. 4

receiving beam indication information sent by a network device — 501

↓

determining the associated reference signal identification sequence according to the beam indication information — 502

↓

determining an associated reference signal identifier to be adopted in at least one sub-time period within the specified time period according to the associated reference signal identification sequence, the specified time period, and a time granularity for beam adjustment within the specified time period — 503

↓

in the at least sub-time period, for downlink transmission, determining a receiving beam of the terminal device corresponding to a sending beam of the network device indicated by the associated reference signal identifier to be adopted in the at least one sub-time period as a receiving beam for the terminal device to receive a signal — 504

FIG. 5

receiving beam indication information sent by a network device — 601

↓

determining the associated reference signal identification sequence according to the beam indication information — 602

↓

determining an associated reference signal identifier to be adopted in at least one sub-time period within the specified time period according to the associated reference signal identification sequence, the specified time period, and a time granularity for beam adjustment within the specified time period — 603

↓

in the at least sub-time period, for uplink transmission, determining, by the terminal device, the sending beam of the terminal device according to a receiving beam of a reference signal corresponding to the associated reference signal identifier — 604

FIG. 6

sending beam indication information to a terminal device — 701

FIG. 7

— 800

apparatus for determining beam

— 810

transceiving unit

FIG. 8

— 900

apparatus for determining beam

— 910

transceiving unit

FIG. 9

1000

1022 — processing component

power component — 1026

1032 — memory

network interface — 1050

I/O interface — 1058

FIG. 10

FIG. 11

## INTERNATIONAL SEARCH REPORT

| International application No. |
|---|
| **PCT/CN2022/079693** |

**A. CLASSIFICATION OF SUBJECT MATTER**

H04W 72/04(2009.01)i; H04L 5/00(2006.01)i

According to International Patent Classification (IPC) or to both national classification and IPC

**B. FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNABS; VEN; CNKI; CNTXT; ENTXT; ENTXTC; 3GPP: 波束, 发送, 关联, 参考, 标识, 指示, 测量, 时间段, 时间粒度, beam, reference, associated, measurement, indicate, time period, time granularity, identifier

**C. DOCUMENTS CONSIDERED TO BE RELEVANT**

| Category* | Citation of document, with indication, where appropriate, of the relevant passages | Relevant to claim No. |
|---|---|---|
| X | CN 113966000 A (HUAWEI TECHNOLOGIES CO., LTD.) 21 January 2022 (2022-01-21) description, paragraphs [0197]-[0498], and figures 1-12 | 1-7, 11-17, 21-28 |
| X | CN 114126062 A (CHINA ACADEMY OF INFORMATION AND COMMUNICATIONS TECHNOLOGY) 01 March 2022 (2022-03-01) description, paragraphs [0047]-[0116], and figures 1-7 | 1-7, 11-17, 21-28 |
| X | ERICSSON. "DL Beam Indication for Periodic and Aperiodic Reference Signals" *3GPP TSG-RAN WG1 #90 R1-1714291*, 12 August 2017 (2017-08-12), sections 2-5 | 1-7, 11-17, 21-28 |
| A | CN 110300444 A (VIVO COMMUNICATION TECHNOLOGY CO., LTD.) 01 October 2019 (2019-10-01) entire document | 1-28 |
| A | CN 111385824 A (CHENGDU HUAWEI TECHNOLOGIES CO., LTD.) 07 July 2020 (2020-07-07) entire document | 1-28 |

☐ Further documents are listed in the continuation of Box C.　　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **01 November 2022** | **17 November 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/079693**

| Patent document cited in search report | | | Publication date (day/month/year) | Patent family member(s) | | | Publication date (day/month/year) |
|---|---|---|---|---|---|---|---|
| CN | 113966000 | A | 21 January 2022 | None | | | |
| CN | 114126062 | A | 01 March 2022 | None | | | |
| CN | 110300444 | A | 01 October 2019 | WO | 2019179317 | A1 | 26 September 2019 |
| CN | 111385824 | A | 07 July 2020 | US | 2021328652 | A1 | 21 October 2021 |
| | | | | EP | 3879873 | A1 | 15 September 2021 |
| | | | | WO | 2020135071 | A1 | 02 July 2020 |

Form PCT/ISA/210 (patent family annex) (January 2015)